# FASCICULE DE BREVET EUROPEEN

(11) **EP 0 647 410 B1**
(45) Date de publication et mention de la délivrance du brevet: **14.06.2000**
(21) Numéro de dépôt: 94115528.5
(22) Date de dépôt: 01.10.1994
(51) Int. Cl.: A23P 1/12, A23K 1/00, A23G 3/20, A23L 1/164, A23K 1/18

(54) **Produit coextrudé et son procédé d'obtention**
Koextrudiertes Produkt und Verfahren seiner Herstellung
Coextruded product and process for making it

(30) Priorité: 08.10.1993 EP 93116293; 08.10.1993 EP 93116294
(43) Date de publication de la demande: 12.04.1995
(73) Titulaire: SOCIETE DES PRODUITS NESTLE S.A., 1800 Vevey (CH)
(72) Inventeur: Dupart, Pierre, CH-1028 Preverenges (CH); Geromini, Oswaldo, CH-1350 Valeyres/Rances (CH); Zafiropoulos, Minas, F-80800 Corbie (FR)
(74) Mandataire: Thomas, Alain

(56) Documents cités:
- EP-A- 0 251 630
- EP-A- 0 258 037
- EP-A- 0 487 757
- DE-A- 2 611 757
- FR-A- 2 226 935
- GB-A- 2 114 418
- LU-A- 65 692

## Description

L'invention concerne un produit coextrudé comprenant une enveloppe externe ayant une épaisseur uniforme et une garniture interne liquide, semi-liquide ou en poudre. L'invention concerne en outre le procédé d'obtention dudit produit coextrudé comportant une enveloppe externe et une garniture.

On connaît des produits composites comportant une enveloppe externe et une garniture interne, par exemple, ceux faisant l'objet des brevets EP 178187, EP 88574 et EP 487757. Dans ces brevets, les produits concernés comportent des enveloppes extérieures, a base de céréales, ayant des teneurs en humidité comprises entre 8 et 10% en poids. Avec ce taux d'humidité, il n'y a aucun problème de conservation à température ambiante.

Le brevet EP 258037 concerne aussi un produit composite comportant une enveloppe externe et une garniture interne. L'inconvénient de cette solution est que ce produit ayant une teneur élevée en eau contient une quantité élevée en composé d'humidification (entre 15 et 35%). Le brevet LU 615692 concerne un produit congelé ou mis en boîte. Le brevet DE 2611757 concerne de la nourriture pour poissons, ayant une teneur en eau faible, à savoir comprise entre 1 et 10%. Le brevet FR 2226935 concerne un produit alimentaire semi-humide avec une teneur en humidité comprise entre 15 et 45% contenant des polypeptides à poids moléculaire faible.

On connaît déjà des procédés permettant de fabriquer des produits coextrudés. Le brevet EP 487757 concerne un procédé de production de produit coextrudé avec une enveloppe externe à base de céréales.

L'inconvénient de ce procédé est qu'il ne permet pas d'obtenir un produit avec une enveloppe externe ayant une épaisseur uniforme, car la durée de formage du produit est trop courte pour garantir un tel résultat. Ceci est surtout gênant si l'on prévoit de fabriquer un produit dont la garniture est liquide, semi-liquide ou en poudre.

Le brevet EP 251630 concerne un procédé de fabrication de cookies (petits gâteaux) coextrudés avec seulement une découpe et un refroidissement desdits cookies. Le brevet GB 2114418 concerne un procédé de fabrication de caramels sans cuisson-extrusion.

Le but de la présente invention est la mise au point d'un produit coextrudé avec garniture liquide, semi-liquide ou en poudre, dans lequel les risques d'obtenir un produit dont la garniture serait susceptible de couler ou d'être apparente de l'extérieur sont minimisés.

Le procédé selon l'invention pour la fabrication du produit coextrudé est aussi bien utilisable en alimentation humaine qu'en alimentation animale.

L'invention concerne un produit coextrudé, conservable à température ambiante et dans lequel l'enveloppe extérieure a une teneur en eau bien supérieure à 10%.

L'invention concerne un produit coextrudé dans lequel l'enveloppe externe à base de viande ou de poisson texturé a une teneur en humidité comprise entre 20 et 40% en poids et contient en outre de l'acide phosphorique, un additif pour baisser l'activité de l'eau à une teneur comprise entre 3 et 5%, un produit antimoisissure et un antioxydant et la garniture représente entre 30 et 40% du volume total et est constitué par un mélange à base d'un produit choisi parmi la graisse animale ayant un point de fusion à 35°C, la graisse végétale ayant un point de fusion à 35°C et la levure en poudre.

Par conservable, dans la présente description, on entend qui se conserve pendant plus de 6 mois à température ambiante dans un emballage étanche. Sauf indication contraire, tous les pourcentages sont en poids.

Le produit coextrudé, selon l'invention, est prévu pour être utilisé en alimentation animale, par exemple pour les animaux de compagnie tels que chats et chiens et comme il est obtenu par cuisson-extrusion, il est directement prêt à l'emploi.

L'enveloppe externe du produit selon l'invention contient en outre de la farine de céréales et/ou de féculents, tels que blé ou pomme de terre.

Comme le produit selon l'invention est à forte teneur en humidité, il faut que l'enveloppe externe contienne le conservateur, comme l'acide phosphorique, l'additif pour baisser l'activité de l'eau, le produit antimoisissure et l'antioxydant. L'additif pour baisser l'activité de l'eau est normalement un mélange de glycérol et de lactosérum hydrolysé et il est utilisé à raison de 3 à 5%. L'acide phosphorique est également utilisé à raison de 3 à 5% par rapport au poids total de l'enveloppe extérieure. Le produit antimoisissure est normalement du sorbate et du citrate de potassium, utilisé à raison de 0,5 à 1% et l'antioxydant est du BHA (Butyl hydroxy anisol) ou du BHT (Butyl hydroxy toluène) à raison de 0,1 à 0,2%.

La garniture est liquide, semi-liquide ou en poudre. Pour obtenir une garniture liquide ou semi-liquide on utilise de la graisse, des produits lactés ou un autre type de viande que celle de l'enveloppe externe.

La garniture st normalement constituée par une graisse animale ou végétale ayant un point de fusion à 35°C, par exemple l'huile de soja ou de suif.

Pour augmenter l'appétence du produit coextrudé selon l'invention, la garniture contient en outre entre 5 et 20% de levure.

La garniture peut également être sous forme de poudre. Dans ce cas, la garniture est choisie parmi les constituants suivants seuls ou en combinaison: sucre, levure, poudre de lait, vitamine, éléments minéraux.

La forme du produit coextrudé n'est pas critique. Elle est de préférence sensiblement ronde, ovale ou elliptique. Le produit coextrudé est soit d'une seule couleur, soit multicolore et a des dimensions comprises entre 15 et 60 mm.

Dans une forme de réalisation particulière, l'enveloppe comprend un mélange de 40 à 60% en poids de viande ou de poisson texturé, entre 30 et 45% de farine de céréales ou de féculents, entre 3 et 5% d'acide phosphorique, ainsi que l'additif pour baisser l'activité de l'eau, le produit antimoisissure et l'antioxydant dans les proportions mentionnées ci-dessus.

Le produit coextrudé selon l'invention a une bonne appétence et peut présenter des formes très variées par rapport aux produits actuellement sur le marché. Le grand avantage est son élasticité.

L'invention concerne en outre le procédé d'obtention dudit produit coextrudé comportant une enveloppe externe et une garniture dans lequel on extrude à une température comprise entre 120 et 200°C l'enveloppe externe et on fait arriver sur la sortie de la filière d'extrusion la garniture, de manière à former un boudin coextrudé qui passe ensuite dans une formeuse pour réaliser un moulage à une température de l'ordre de 70°C en une durée de l'ordre de la seconde par rouleau de pression et on refroidit à l'air à une température comprise entre 20 et 70°C le produit obtenu, la formeuse étant du type comprenant un anneau extérieur équipé de matrices, excentré par rapport à un corps de couronne équipé également de matrice, tous deux montés à rotation et entraînés par un seul moteur.

Si on opère pour obtenir un produit en alimentation animale le mélange pour l'enveloppe externe qui passe dans l'extrudeuse est un mélange d'une suspension de viande ou de poisson texturés, de farine de céréales et de féculents et d'une solution d'acide phosphorique et d'additif pour baisser l'activité de l'eau.

Par viande ou poisson texturé, il faut comprendre une pâte de viande ou de poisson dans laquelle on a modifié partiellement ou totalement les propriétés fonctionnelles des protéines par traitement thermique, mécanique et à l'aide d'agents de liaison lors de l'extrusion. Par viande, on entend de la viande de poulet, lapin, bovins ou ovins, de la farine obtenue à partir de carcasses des animaux précités ou des abats. Par abats, on entend aussi bien des lobes de poumon, que des foies ou des rognons. Par poisson, on entend tout type de poisson et la farine de poisson. Dans ce cas, la garniture et constituée par un mélange à base d'un produit choisi parmi l'huile végétale, l'huile animale et la levure en poudre.

Si on opère en alimentation humaine, on peut surtout fabriquer des produits dont l'enveloppe externe est à base de céréales et la garniture et soit du chocolat semi-liquide, de la pâte d'amande ou de la poudre de cacao. Dans ce cas, l'enveloppe externe est préparée à partir d'un mélange de farines, d'eau, de sucre, de sel et de colorants et d'arôme.

On peut également envisager la fabrication, selon le procédé de l'invention, de pâtes alimentaires farcies à la viande ou des boules de céréales fourrées de crème.

Le profil de température de l'extrudeur est compris entre 120 et 200°C. Si on travaille en alimentation animale, on opère entre 150 et 160°C. En alimentation humaine, on a un profil de température de 120 à 140°C. La garniture est normalement introduite à température ambiante ou plus élevée, On a donc un procédé de cuisson-extrusion permettant d'obtenir un produit prêt à l'emploi.

Lorsque le boudin coextrudé sort de la filière de coextrusion, on le refroidit à une température de l'ordre de 70°C et on le soumet à un formage qui dure de l'ordre de la seconde.

Après le formage, on refroidit le produit coextrudé à une température comprise entre 20 et 70°C.

On opère dans l'extrudeur avec un débit de 150 à 600 kg/h. En alimentation humaine, on travaille plutôt vers 150 kg/h, tandis qu'en alimentation animale on peut avoir des rendements plus élevés, par exemple compris entre 300 et 600 kg/h. La vitesse de défilement du boudin coextrudé est de l'ordre de 10 à 40 m/min.

Le dispositif pour la mise en oeuvre du procédé décrit ci-dessus comprend une extrudeuse, une tête de coextrusion, une formeuse et un système de refroidissement.

Cette ligne de fabrication est très compacte et a une dimension de l'ordre de 20 m. On utilise comme extrudeuse, un système bivis, par exemple de Clextral® ou Werner Pfleiderer®. Elle a une longueur comprise entre 1,2 et 1,8 m.

La tête de coextrusion est ronde, d'un diamètre de l'ordre de 20 mm et comporte un canal d'amenée de la garniture sensiblement au centre du flux de pâte.

La formeuse est du type utilisée dans la confiserie pour la fabrication de bonbons, comprenant un anneau extérieur équipé de matrices, excentré par rapport à un corps de couronne équipé également de matrices, tous deux montés à rotation et entraînés par un seul moteur de manière concomitante pour former en continu le produit coextrudé. Les deux éléments sont excentrés de manière à permettre l'entrée des boudins, le formage en tant que tel et la détente.

Le produit coextrudé sort à une température de l'ordre de 70°C, passe sur une bande de distribution et arrive finalement dans un système de refroidissement à air à température ambiante avec un ou plusieurs étages.

Le procédé et le dispositif selon l'invention permettent de fabriquer un produit coextrudé exempt de tout risque de coulage de la garniture, avec une productivité élevée, sans déchet et sur une ligne très compacte.

La suite de la description est faite en référence aux dessins sur lesquels
Figure 1
   est une représentation schématique du dispositif pur la mise en oeuvre du procédé selon l'invention,
Figure 2
   est une représentation schématique de la tête de coextrusion,
Figure 3
   est une coupe du produit selon une première forme de réalisation et
Figure 4
   est une coupe du produit selon une seconde forme de réalisation.

On charge l'extrudeur (1) de la matière première souhaitée, par exemple pour un produit en alimentation animale de farines et d'une suspension de viande. Compte tenu du profil de température, par exemple de l'ordre de 150-160°C, on effectue une cuisson de la pâte (5) qui arrive sur la tête de coextrusion (2). Le système de pompage (3) amène par le conduit (7) la garniture (6) au sein de la masse de pâte (5). On obtient alors un boudin coextrudé (8), qui, après profilage adéquat, est amené vers la formeuse (4). Cette formeuse est par exemple du type UNIPLAST® de la Société Bosch et comprend une alimentation (9) du boudin et un système d'anneau extérieur (10) équipé de matrices, excentré par rapport à un corps de couronne (11), tous deux entraînés en rotation par un système (12) opérant la transmission entre un moteur (non représenté) et ladite couronne, de manière concomitante. Le fonctionnement de la formeuse est le suivant: le boudin (8) entre en (13), est préformé en (14) et on arrive en (15) à une séparation, puis vers une détente en (16). Les produits coextrudés (17) sont alors éjectes en (18) et amenés d'un couloir d'alimentation (19) vers la bande de distribution (20), puis vers le système de refroidissement (21) à air. Ce système est a 3 étages. Les produits (17) sont transportés sur une bande transporteuse (22) dans le sens de la flèche A, tombent sur la bande transporteuse (23) dans le sens de la flèche (B) et tombent finalement sur la bande transporteuse (24) dans le sens de la flèche (C) où ils sont prêts à être emballés dans un emballage étanche.

Le dispositif selon l'invention est également utilisable pour fabriquer des produits en alimentation humaine, tels que des boules de céréales fourrées en chocolat.

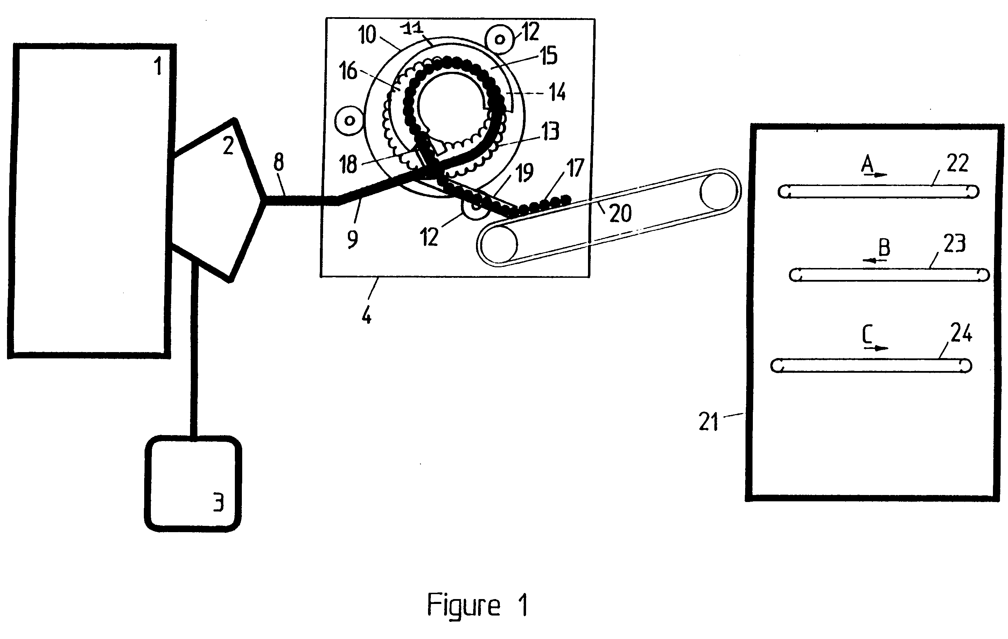

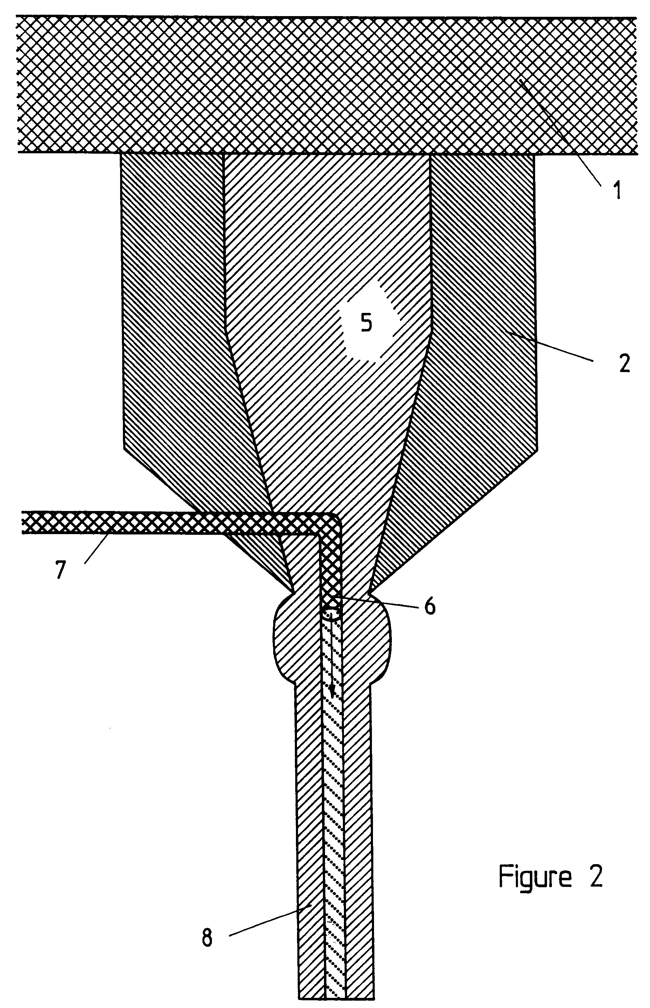

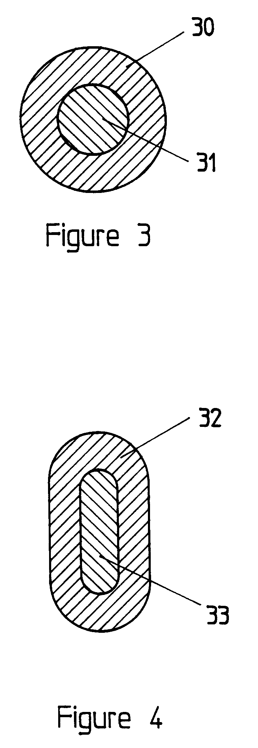

Selon la Figure 3, le produit coextrudé comprend une enveloppe externe (30) à base de viande ayant une teneur en eau de 28,5% avec un a_{w} de 0,86. La garniture interne (31) est à base d'huile de soja et de levure.

Sur la Fig. 4, l'enveloppe externe (32) est à base de poisson ayant une teneur en eau de 27,5% avec un a_{w} de 0,86. La garniture (33) est également à base d'huile de soja et de levure.

La suite de la description est faite en référence aux exemples.

### Exemple 1

Cet exemple concerne un mode de mise en oeuvre du procédé selon l'invention pour l'alimentation animale.

On fait un mélange dans l'extrudeur de 50% en poids de suspension de viande, avec 40% de mélange de farines et 10% de suspension de conservateur.

La suspension de viande est obtenue par concassage de pains congelés à -21°C, puis broyage, puis microbroyage et mélange dans un pétrin de sorbate de potassium, d'arôme et d'antioxydants. La viande utilisée est un mélange 50/50 de poumons et de viande de porc.

Pour les farines, on mélange simplement de l'amidon de pomme de terre, du glucose, du plasma de sang et du gluten de blé.

Pour la suspension de conservateur, on mélange dans un pétrin de l'acide phosphorique, du glycérol et du lactosérum hydrolysé.

On introduit séparément les 3 composants décrits ci-dessus dans un extrudeur Clextral® BC 72. Les segments de l'extrudeur sont à une température de 22, 28, 140 et 160°C. On charge la viande et la farine à un débit de 125 kg/h et la suspension de conservateur à 25 kg/h.

On utilise une garniture composée d'un mélange d'huile de soja et de levure pour augmenter l'appétence. Ce fourrage est amené sur la tête coextrusion à un débit de 25 kg/h.

Le boudin fourré sort à une vitesse de 15 m/min et est refroidi par circulation d'eau autour dudit boudin (refroidisseur double enveloppe). Il a un diamètre de 20 mm. On l'amène sur une formeuse UNIPLAST® 160 qui tourne à une vitesse réglée selon la vitesse d'arrivée du boudin coextrudé.

Les produits coextrudés sont ensuite refroidis sur un refroidisseur à bandes avec 3 niveaux.

On obtient un rendement de 300 kg/heure.

Les tests d'appétence réalisés sur ces produits donnent des résultats supérieurs aux produits actuellement connus sur le marché.

### Exemple 2

Cet exemple concerne un mode de mise en oeuvre du procédé selon l'invention pour l'alimentation humaine. On opère dans ce cas avec une enveloppe comportant 80% de céréales, 10% de sucre et 10% d'eau et la cuisson extrusion a lieu à 160°C.

La garniture est composée de 80% de chocolat et de 20% d'amandes broyées. Le boudin coextrudé sort à une vitesse de 15 m/min.

### Exemple 3

La garniture du produit coextrudé contient 77% d'huile de soja, 20% de levure, un antioxydant, du sorbate et du citrate de potassium et de la lécithine. Cette garniture représente 35% du volume du produit.

L'enveloppe externe comprend 40% d'un mélange sec d'amidon de pomme de terre, de glucose, de plasma de sang et de gluten de blé, 50% de suspension de poumons et de viande de porc et 10% de suspension à base d'acide phosphorique pour la conservation et de glycérol et de lactosérum hydrolysé comme additif pour baisser l'activité de l'eau.

### Exemple 4

La garniture du produit coextrudé est la même que pour l'exemple 3.

L'enveloppe externe comprend 40% d'un mélange sec d'amidon de pomme de terre, de glucose, de plasma de sang et de gluten de blé, 50% de suspension de sardines et 10% de suspension d'aide phosphorique, de glycérol et de lactosérum hydrolysé.

### Exemple 5

La garniture du produit coextrudé est la même que pour l'exemple 3.

L'enveloppe externe comprend 40% d'un mélange sec de blé, d'amidon de pomme de terre, de plasma de sang, de gluten de blé et de glucose, 50% de suspension de poumons, de viande de porc, de tissus et d'autolysat de poulet et 10% e suspension d'acide phosphorique, de glycérol et de lactosérum hydrolysé.

### Exemple 6

L'enveloppe externe est la même que dans l'exemple 5 et la garniture est constitué e de 50% de levure en poudre et 50% de sucre.

## Revendications

1. Produit coextrudé comprenant une enveloppe externe ayant une épaisseur uniforme et une garniture interne liquide, semi-liquide ou en poudre, dans lequel l'enveloppe externe à base de viande ou de poisson texturé a une teneur en humidité comprise entre 20 et 40% en poids et contient en outre de l'acide phosphorique, un additif pour baisser l'activité de l'eau à une teneur comprise entre 3 et 5 % en poids, un produit antimoisissure et un antioxydant et la garniture représente entre 30 et 40% du volume total et est constitué par un mélange à base d'un produit choisi parmi la graisse animale ayant un point de fusion à 35° C, la graisse végétale ayant un point de fusion à 35° C et la levure en poudre.

2. Produit coextrudé selon la revendication 1, caractérisé en ce que l'enveloppe externe contient en outre de la farine de céréales ou de féculents.

3. Produit coextrudé selon l'une des revendications 1 ou 2, caractérisé en ce que la garniture contient de l'huile de soja.

4. Produit coextrudé selon la revendication 3, caractérisé en ce que la garniture contient entre 5 et 20% en poids de levure.

5. Produit coextrudé selon l'une des revendications 1 à 4, caractérisé en ce que la garniture est une poudre, choisie parmi les constituants suivants: sucre, levure, poudre de lait, vitamines et éléments minéraux.

6. Produit coextrudé selon l'une quelconque des revendications 1 à 5, caractérisé en ce que dans l'enveloppe externe la viande ou le poisson texturé représente entre 40 et 60% en poids, la farine de céréales ou de féculents entre 30 et 45% en poids, l'acide phosphorique et l'additif pour baisser l'activité de l'eau entre 3 et 5% en poids, le produit antimoisissure entre 0,5 et 1% en poids et l'antioxydant entre 0,1 et 0,2% en poids.

7. Procédé d'obtention d'un produit coextrudé selon l'une quelconque des revendications 1 à 6, dans lequel on extrude à une température comprise entre 120 et 200° C l'enveloppe externe et on fait arriver sur la sortie de la filière d'extrusion la garniture, de manière à former un boudin coextrudé qui passe ensuite dans une formeuse pour réaliser un moulage à une température de l'ordre de 70° C en une durée de l'ordre de la seconde par rouleau de pression et on refroidit à l'air à une température comprise entre 20 et 70° C le produit obtenu, la formeuse étant du type comprenant un anneau extérieur équipé de matrices, excentré par rapport à un corps de couronne équipé également de matrice, tous deux montés à rotation et entraînés par un seul moteur.

8. Procédé selon la revendication 7, caractérisé en ce qu'on mélange dans l'extrudeuse les composants de l'enveloppe externe.

9. Procédé selon l'une des revendications 7 ou 8, caractérisé en ce qu'on travaille à un débit de 150 à 600 kg/h et avec une vitesse de défilement du boudin coextrudé de l'ordre de 10-40 m/min.

## Claims

1. Coextruded product comprising an outer envelope having a uniform thickness and an inner liquid, semi-liquid or powdered filling, wherein the outer envelope based on textured meat or fish has a moisture content comprised between 20 and 40 % by weight and additionally contains phosphoric acid, an additive to lower the water activity to a content comprised between 3 and 5 % by weight, an anti-mould product and an antioxidant, and the filling represents between 30 and 40 % of the total volume and consists of a mixture based on a product chosen from animal fat having a melting point of 35°C, vegetable fat having a melting point of 35°C and powdered yeast.

2. Coextruded product according to claim 1, characterized in that the outer envelope additionally contains cereal or starch flour.

3. Coextruded product according to either of claims 1 or 2, characterized in that the filling contains soya oil.

4. Coextruded product according to claim 3, characterized in that the filling contains between 5 and 20 % by weight of yeast.

5. Coextruded product according to one of claims 1 to 4, characterized in that the filling is a powder, chosen from amongst the following constituents: sugar, yeast, milk powder, vitamins and mineral elements.

6. Coextruded product according to any one of claims 1 to 5, characterized in that in the outer envelope textured meat or fish represents between 40 and 60 % by weight, cereal or starch flour between 30 and 45 % by weight, phosphoric acid and the additive for lowering the water activity between 3 and 5 % by weight, the anti-mould product between 0.5 and 1 % by weight and the antioxidant between 0.1 and 0.2 % by weight.

7. Process for obtaining a coextruded product according to any one of claims 1 to 6, wherein the outer envelope is extruded at a temperature comprised between 120 and 200°C and the filling is delivered to the outlet from the extrusion die so as to form a coextruded rope which then passes into a forming unit for carrying out moulding at a temperature of the order of 70°C over a period of the order of a second by a pressure roller and the product obtained is air cooled to a temperature comprised between 20 and 70°C, the forming unit being of the type comprising an outer ring equipped with dies, eccentrically positioned with respect to a crown body also equipped with a die, both being mounted for rotation and driven by a single motor.

8. Process according to claim 7, characterized in that the components of the outer envelope are mixed in the extruder.

9. Process according to either of claims 7 or 8, characterized in that a throughput of 150 to 600 kg/h is used together with a rate of travel of the coextruded rope of the order of 10-40 m/min.

## Patentansprüche

1. Koextrudiertes Produkt, das eine äußere Umhüllung mit einer gleichmäßigen Dicke und eine innere flüssige, halbflüssige oder pulverförmige Füllung umfaßt, wobei die äußere Umhüllung auf Basis von texturiertem Fleisch oder texturiertem Fisch einen Feuchtigkeitsgehalt aufweist, der zwischen 20 und 40 Gew.-% liegt, und darüberhinaus Phosphorsäure, einen Zusatzstoff zur Absenkung der Wasseraktivität, der zwischen 3 und 5 Gew.-% liegt, ein Antischimmelmittel und ein Antioxidans enthält und die Füllung zwischen 30 und 40% des Gesamtvolumens ausmacht und aus einer Mischung auf der Basis eines Produktes aufgebaut ist, das ausgewählt ist aus tierischem Fett mit einem Schmelzpunkt von 35°C, aus pflanzlichem Fett mit einem Schmelzpunkt von 35°C und aus Hefepulver.

2. Koextrudiertes Produkt nach Anspruch 1, dadurch gekennzeichnet, daß die äußere Umhüllung außerdem Getreidemehl oder Stärkemehl enthält.

3. Koextrudiertes Produkt nach einem der Ansprüche 1 oder 2, dadurch gekennzeichnet, daß die Füllung Sojabohnenöl enthält.

4. Koextrudiertes Produkt nach Anspruch 3, dadurch gekennzeichnet, daß die Füllung zwischen 5 und 20 Gew.-% Hefe enthält.

5. Koextrudiertes Produkt nach einem der Ansprüche 1 bis 4, dadurch gekennzeichnet, daß die Füllung ein Pulver ist, das ausgewählt ist aus den folgenden Bestandteilen: Zucker, Hefe, Milchpulver, Vitamine und Mineralelemente.

6. Koextrudiertes Produkt nach irgendeinem der Ansprüche 1 bis 5, dadurch gekennzeichnet, daß in der äußeren Umhüllung das texturierte Fleisch oder der texturierte Fisch zwischen 40 und 60 Gew.-%, das Getreidemehl oder das Stärkemehl zwischen 30 und 45 Gew.-%, die Phorsphorsäure und der Zusatzstoff zur Absenkung der Wasseraktivität zwischen 3 und 5 Gew.-%, das Antischimmelmittel zwischen 0,5 und 1 Gew.-% und das Antioxidans zwischen 0,1 und 0,2 Gew.-% ausmachen.

7. Verfahren zur Gewinnung eines koextrudierten Produkts nach irgendeinem der Ansprüche 1 bis 6, wobei man bei einer Temperatur, die zwischen 120 und 200°C liegt, die äußere Umhüllung extrudiert und man die Füllung am Ausgang der Extrusionsdüse austreten läßt, um einen koextrudierten Strang zu bilden, der dann eine Formstation passiert, um eine Formung bei einer Temperatur in der Größenordnung von 70°C in einer Zeitdauer in der Größenordnung von einer Sekunde mit einer Prägewalze zu bewirken, und das erhaltene Produkt mit Luft bei einer Temperatur, die zwischen 20 und 70°C liegt, abkühlt, wobei die Formstation von der Art ist, daß sie einen mit Matrizen versehenen äußeren Ring umfaßt, der bezüglich eines ebenfalls mit einer Matrix ausgestatteten Formkranzkörpers exzentrisch angeordnet ist, wobei beide rotierbar montiert sind und mit einem einzigen Motor angetrieben werden.

8. Verfahren nach Anspruch 7, dadurch gekennzeichnet, daß man in dem Extruder die Bestandteile der äußeren Umhüllung mischt.

9. Verfahren nach einem der Ansprüche 7 oder 8, dadurch gekennzeichnet, daß man mit einem Durchsatz von 150 bis 600 kg/h und mit einer Vorschubgeschwindigkeit des koextrudierten Strangs in der Größenordnung von 10-40 m/min arbeitet.
